# EUROPÄISCHE PATENTANMELDUNG

(11) **EP 1 255 361 A1**
(43) Veröffentlichungstag der Anmeldung: **06.11.2002**
(21) Anmeldenummer: 01110607.7
(22) Anmeldetag: 30.04.2001
(51) Int. Cl.: H04B 7/005

(54) **Verfahren zur Datenübertragung mit gruppenspezifischer Sendeleistung in Funk-Kommunikationssystemen mit konstanter Sendeleistung pro Gruppe**

(71) Anmelder: SIEMENS AKTIENGESELLSCHAFT, 80333 München (DE)
(72) Erfinder: Bing, Torsten, 80807 München (DE); Bolinth, Edgar, 41189 Moenchengladbach (DE); Kadelka, Arndt, 52068 Aachen (DE); Krämling, Andreas, 52072 Aachen (DE)

(57) **Zusammenfassung**

Verfahren zur Datenübertragung mit gruppenspezifischer Sendeleistung in Funk-Kommunikationssystemen mit konstanter Sendeleistung pro Gruppe

Beschrieben wird ein Verfahren zur Übertragung von Daten von einer Sende-/Empfangseinrichtung (APT) zu Teilnehmer-Endgeraten (WT). Pro Übertragungseinheit wird die Sendeleistung der Sende-/Empfangseinrichtung (APT) konstant gehalten, es erfolgt keine individuelle Steuerung der Sendeleistung pro Endgerät (WT). Gruppen von Teilnehmer-Endgeräten (WT) werden in Abhängigkeit von Kriterien für die Datenübertragung von der Sende-/Empfangseinrichtung (APT) zu den Endgeräten (WT) definiert, und die Sendeleistung gruppenspezifisch festgelegt.

## Beschreibung

Verfahren zur Datenübertragung mit gruppenspezifischer Sendeleistung in Funk-Kommunikationssystemen mit konstanter Sendeleistung pro Gruppe

Die vorliegende Erfindung betrifft ein Verfahren zur Übertragung von Daten von einer Sende-/Empfangseinrichtung eines Funk-Kommunikationssystems zu Teilnehmer-Endgeräten des Funk-Kommunikationssystems, wobei jeweils zumindest während der Dauer einer Übertragungseinheit die Sendeleistung der Sende-/Empfangseinrichtung für Übertragungen an verschiedene Teilnehmer-Endgeräte einer definierte Gruppe von Teilnehmer-Endgeräten konstant gehalten wird. Insbesondere gilt dies für Funk-Kommunikationssysteme, die den Betrieb von sektorisierten Sende-/Empfangseinrichtungen unterstützen.

Solch ein Verfahren kann insbesondere in solchen Funk-Kommunikationssystemen Anwendung finden, in denen mehrere Teilnehmer-Endgeräte auf ein gemeinsames Übertragungsmedium zugreifen. Der Zugriff von mehreren Teilnehmer-Endgeräten auf ein gemeinsames Übertragungsmedium kann durch Vielfachzugriffsverfahren (Multiple Access MA) wie Zeitmultiplex-Verfahren (Time Division Multiple Access TDMA), Frequenzmultiplex (Frequency Division Multiple Access FDMA), Codemultiplex (Code Division Multiple Access CDMA) oder Raummultiplex (Space Division Multiple Access SDMA) erreicht werden. Bei Funk-Kommunikationssystemen wie GSM, TETRA, DECT findet Frequenzmultiplex und/oder Zeitmultiplex Anwendung, also die Unterteilung des gemeinsamen Übertragungsmediums in Frequenzkanäle und/oder Zeitkanäle. Zellulare Funk-Kommunikationssysteme sind ein Beispiel für eine Anwendung von Raummultiplex-Verfahren, da hier die Funkkanäle in Funkzellen wiederverwendet werden, die einem bestimmten Abstand voneinander aufweisen. Um die zur Verfügung stehenden Übertragungskapazitäten möglichst effektiv zu nutzen, wird angestrebt, dass eine möglichst geringe Anzahl von Zellen zwischen zwei Zellen mit gleichen Funkkanälen, also ein möglichst geringer Wiederholabstand, notwendig ist. Eine weitere Möglichkeit für Raummultiplex-Systeme ist die Verwendung von sektorisierten Antennen, wie sie beispielsweise aus US 6,009,124 bekannt sind, wo diese speziell für Anwendungen bei Hiper-LAN- oder ATM-Kommunikationssystemen vorgesehen sind.

Für Funk-Kommunikationssysteme mit Zellen oder Sektoren, die jeweils mindestens eine Basisstation als Sende-/Empfangsrichtung aufweisen, kann bei gewissen Funk-Kommunikationssystemen zur Reduzierung der gegenseitigen Störung der Funkzellen mit gleichen oder benachbarten Funkkanälen aufgrund von Interferenzen eine individuelle Steuerung der Sendeleistung der Basisstationen für Datenübertragungen an jedes der Teilnehmer-Endgeräte vorgesehen werden. Diese individuelle Leistungssteuerung für Übertragungen an jedes Teilnehmer-Endgerät ist jedoch immer nicht bei allen Funk-Kommunikationssystemen möglich. Dies kann grundsätzlich aus technischen Gründen oder aufgrund von Standardisierungsauflagen oder der momentanen Situation im Funk-Kommunikationssystem ausgeschlossen sein. So kann beispielsweise bei Funk-Kommunikationssystemen nach dem Hiperlan/2-Standard die Sendeleistung einer zentralen Sendestation als Sende-/Empfangseinrichtung nicht für jedes einzelne Teilnehmer-Endgerät bzw. für einzelne Kommunikationsverbindungen individuell eingestellt werden. Es muss vielmehr die Sendeleistung für Datenübertragungen an eine bestimmte Gruppe von Teilnehmer-Endgeräten zumindest während eines MAC-Rahmens (Medium Access Control-Rahmen) als einer Übertragungseinheit des Funk-Kommunikationssystems konstant gehalten werden. Einzelne Gruppen innerhalb eines MAC-Rahmens können durch die Zugehörigkeit zu unterschiedlichen Sektoren einer Zelle entstehen, wenn sektorisierte Antennen in einem solchen Hiperlan/2-System verwendet werden. Das Fehlen einer individuellen Regulierung der Sendeleistung führt zu erhöhten gegenseitigen Störungen der Teilnehmer-Endgeräte durch Interferenzen und damit zu einer verringerten Effizienz des Funk-Kommunikationssystems. Ähnliche Probleme können auch bei andern Funk-Kommunikationssystemen auftreten, die ähnliche begrenzende Bedingungen aufweisen wie Hiperlan/2.

Aufgabe der vorliegenden Erfindung ist es daher, ein verbessertes, störungsfreieres Verfahren zur Übertragung von Daten von einer Sende-/Empfangseinrichtung eines Funk-Kommunikationssystems zu Teilnehmer-Endgeräten des Funk-Kommunikationssystems bereitzustellen, wobei zumindest während der Dauer einer Übertragungseinheit die Sendeleistung der Sende-/Empfangseinrichtung für Übertragungen an verschiedene Teilnehmer-Endgeräte einer definierte Gruppe von Teilnehmer-Endgeräten konstant gehalten werden muss. Diese Aufgabe wird gelöst durch die Merkmale des Anspruchs 1. Ferner umfasst Anspruch 14 eine erfindungsgemäße Sende-/Empfangseinrichtung für ein Funk-Kommunikationssystem, die eine störungsfreiere Datenübertragung unter den vorgenannten Voraussetzungen ermöglicht.

Bei dem erfindungsgemäßen Verfahren zur Übertragung von Daten von einer Sende-/Empfangseinrichtung eines Funk-Kommunikationssystems zu Teilnehmer-Endgeräten des Funk-Kommunikationssystems ist also vorgesehen bzw. durch bestimmte Voraussetzungen vorgegeben, dass jeweils zumindest während der Dauer einer Übertragungseinheit die Sendeleistung der Sende-/Empfangseinrichtung für Übertragungen an verschiedene Teilnehmer-Endgeräte einer definierte Gruppe von Teilnehmer-Endgeräten konstant gehalten wird bzw. werden muss. Entsprechend der vorliegenden Erfindung ist nun vorgesehen, dass zumindest für die Dauer einer Übertragungseinheit mindestes zwei Gruppen von Teilnehmer-Endgeräten in Abhängigkeit von mindestens einem Kriterium, beispielsweise einem Qualitätskriterium, für die Datenübertragung von der Sende-/Empfangseinrichtung zu den Teilnehmer-Endgeräten (WT) definiert werden, und die Sendeleistung der Sende-/Empfangseinrichtung gruppenindividuell festgelegt wird, wobei die Sendeleistung beispielsweise in Abhängigkeit von dem Kriterium gesteuert wird. Damit wird erreicht, dass trotz der Vorgabe, für eine Gruppe die Sendeleistung konstant zu halten, erreicht, dass je nach den bestimmten Kriterien eine Optimierung der Sendeleistung für die Datenübertragung zu den Teilnehmer-Endgeräten erfolgt und stets nur die Sendeleistung vorgesehen werden muss, die erforderlich ist, um beispielsweise bestimmte Qualitätskriterien einzuhalten. Sind für bestimmte Teilnehmer-Endgeräte die Qualitätskriterien bei einer definierten ersten Sendeleistung der Sende-/Empfangseinrichtung nicht einhaltbar, so werden diese Teilnehmer-Endgeräte einer neuen Gruppe zugeordnet, für die dann die Datenübertragung mit einer entsprechend höheren Sendeleistung erfolgen kann.

Als Kriterien können alle geeigneten Kriterien herangezogen werden, die im Rahmen der Datenübertragung zu den Teilnehmer-Endgeräten zu erfüllen sind, wie Signalstärke, Signalqualität, Signallaufzeiten etc. Es können bei der Definition der Gruppen ein oder mehrere Kriterien berücksichtigt werden. So kann insbesondere vorgesehen werden, dass als ein Kriterium bzw. Qualitätskriterium das Verhältnis aus dem von der Sende-/Empfangseinrichtung übertragenen Signal zu Störsignalen verwendet wird, wie insbesondere das Verhältnis von Sendesignal zu Interferenzsignalen (CIR Carrier to Interference Ratio) oder das Signal-Rausch-Verhältnis (SNR Signal to Noise Ratio). Solche Störsignale können beispielsweise durch Hindernisse im Signalausbreitungsweg von der Sende-/Empfangseinrichtung oder auch durch andere bestehende Kommunikationsverbindungen zu anderen Teilnehmer-Endgeräten entstehen, die beispielsweise mit anderen Sende-/Empfangseinrichtungen kommunizieren.

Als ein alternatives oder zusätzliches Kriterium bzw. Qualitätskriterium kann die Signaldämpfung der von der Sende-/Empfangseinrichtung zu den Teilnehmer-Endgeräten übertragenen Signale verwendet werden. Hierbei wird also die Abschwächung des ausgesandten Signals betrachtet, die sich beispielsweise durch die Entfernung zwischen der sendenden Sende-/Empfangseinrichtung und dem Teilnehmer-Endgerät oder auch durch Hindernisse zwischen beiden ergeben kann, insbesondere, wenn sich die Sende-/Empfangseinrichtung und/oder das Teilnehmer-Endgerät innerhalb eines Gebäudes befinden. Es können also in einem speziellen Fall - in dem beispielsweise eine weitgehend ungestörte Signalausbreitung erfolgt oder schlicht zur Vereinfachung des Verfahrens - als Maß für die Signaldämpfung Abstände zu der Sende-/Empfangseinrichtung berücksichtigt werden. Die Definition der Gruppen kann dann über den aktuellen Aufenthaltsort der Teilnehmer-Endgeräte innerhalb eines definierten Radius bzw. Kreisringen um die Sende-/Empfangseinrichtung erfolgen, so dass sich für diesen Fall eine Raummultiplex-Struktur ergibt, wobei die Kreisringe auch durch bestimmte Bereiche beispielsweise der Signaldämpfung oder des Signal zu Rausch-Verhältnisses definierbar sind. Für die anderen vorgenannten Fälle ergibt sich jedoch räumlich betrachtet eine dynamische Struktur der Gruppen, da sich beispielsweise in einer - von der Sende-Empfangseinrichtung aus gesehenen - Richtung ungestörter Signalausbreitung die Teilnehmer-Endgeräte einer Gruppe mit einer bestimmten zugehörigen Sendeleistung in größerem Abstand von der Sende-/Empfangseinrichtung aufhalten können als in einer Richtung mit stärkeren Störungen, z.B. durch Hindernisse oder sonstige Interferenzen.

Um die verfügbaren Übertragungskapazitäten einer möglichst großen Zahl von Teilnehmer-Endgeräten zur Verfügung stellen zu können, kann die Definition der Gruppen zusätzlich über den aktuellen Aufenthaltsort der Teilnehmer-Endgeräte innerhalb von definierten Raumwinkelbereichen um die Sende-/Empfangseinrichtung erfolgen, was insbesondere durch die Verwendung von sektorisierten Antennen realisiert werden kann, wie sie grundsätzlich bereits aus eingangs genannten dem Stand der Technik bekannt sind.

Die Steuerung der Gruppenzugehörigkeit der Teilnehmer-Endgeräte kann insbesondere dadurch erfolgen, dass sich ein Teilnehmer-Endgerät bei einem ersten Zugriff auf das Funk-Kommunikationssystem entsprechend der definierten Gruppenzugehörigkeit zunächst auf einen bestimmten Signalisierungskanal synchronisiert. Die Datenübertragung zu diesem Teilnehmer-Endgerät wird so lange über diesen bestimmten Signalisierungskanal gesteuert wird, bis mindestens ein Qualitätskriterium für die Datenübertragung von der Sende-/Empfangseinrichtung einen definierten ersten Schwellwert überschreitet oder einen definierten zweiten Schwellwert unterschreitet. Damit wird dafür gesorgt, dass immer ein Mindestmaß für das entsprechende Qualitätskriterium gewährleistet wird. Kann dieses Mindestmaß an Qualität nicht mehr gewährleistet werden, erfolgt also ein Überschreiten des ersten Schwellwertes, so wird ein Gruppenwechsel des Teilnehmer-Endgerätes zu einer anderen Gruppe - insbesondere unter Synchronisation des Teilnehmer-Endgerätes auf einen anderen Signalisierungskanal einer anderen Gruppe - mit zugehöriger höherer Sendeleistung der Sende-/Empfangseinrichtung durchgeführt. Ergeben sich dagegen besonders hohe Werte für das entsprechende Qualitätskriterium, so dass sich ein Unterschreiten des zweiten Schwellwertes ergibt, so kann ein Gruppenwechsel des Teilnehmer-Endgerätes zu einer anderen Gruppe - wiederum unter Synchronisation des Teilnehmer-Endgerätes auf einen anderen Signalisierungskanal einer anderen Gruppe - mit zugehöriger niedrigerer Sendeleistung der Sende-/Empfangseinrichtung erfolgen. Dadurch wird verhindert, dass für Teilnehmer-Endgeräte eine unnötig hohe Sendeleistung verwendet wird. Die für dieses Teilnehmer-Endgerät vorgesehenen Daten werden dann nur noch mit der verringerten Sendeleistung der neuen Gruppe gesendet, so dass sich der Anteil derjenigen Daten, die mit möglichst geringer Sendeleistung übertragen werden, an der Gesamtmenge der übertragenen Daten verringert, was in gleichem Maße die Wahrscheinlichkeit für störende Einflüsse auf andere Kommunikationsverbindungen herabsetzt.

Es kann aber auch vorgesehen werden, dass zur Steuerung der Gruppenzugehörigkeit zusätzlich vorgesehen wird, dass sich - wie im vorigen Fall - ein Teilnehmer-Endgerät bei einem ersten Zugriff auf das Funk-Kommunikationssystem entsprechend der definierten Gruppenzugehörigkeit auf einen bestimmten Signalisierungskanal synchronisiert, jedoch die Datenübertragung zu diesem Teilnehmer-Endgerät so lange über diesen bestimmten Signalisierungskanal gesteuert wird, bis die für eine Datenübertragung von der Sende-/Empfangseinrichtung zu dem Teilnehmer-Endgerät benötigte Übertragungskapazität die für die Gruppe, der das Teilnehmer-Endgerät angehört, verfügbare Übertragungskapazität überschreitet. Dies ist einerseits für solche Fälle relevant, in denen in anderen Gruppen möglicherweise mehr Übertragungskapazität zur Verfügung steht als in der aktuellen Gruppe, der ein Teilnehmer-Endgerät gerade angehört. Ein anderer Anwendungsfall sind aber auch Funk-Kommunikationssysteme, bei denen die Übertragungskapazität von der Signalqualität abhängt, d.h. bei weitgehend konstanten Störeinflüssen von der Sendeleistung, mit der die Signale gesendet werden. Gerade für einen solchen Fall wird dann vorgesehen, dass bei Überschreiten der Übertragungskapazität ein Gruppenwechsel des Teilnehmer-Endgerätes zu einer anderen Gruppe - insbesondere unter Synchronisation des Teilnehmer-Endgerätes auf einen anderen Signalisierungskanal einer anderen Gruppe - mit zugehöriger höherer Sendeleistung der Sende-/Empfangseinrichtung erfolgt. Dann kann z.B. bei Verwendung einer adaptiven Modulation aufgrund der nach dem Gruppenwechsel vorliegenden höheren Sendeleistung eine höhere Übertragungskapazität zur Verfügung gestellt werden.

Ein besonders einfaches Verfahren zur Synchronisation auf einen anderen Signalisierungskanal kann verwendet werden, wenn die Struktur der von der Sende-/Empfangseinrichtung übertragenen Daten, speziell der Signalisierungsdaten, eine strikt definierte Struktur haben, aus der eine eindeutig abgestufte Reihenfolge und Zuordnung der Signalisierungskanäle zu Gruppen mit zunehmender oder abnehmender Sendeleistungsstärke möglich ist. D.h. der erste Signalisierungskanal wäre dann beispielsweise der Gruppe mit der höchsten oder niedrigsten Sendeleistung zugeordnet, alle zeitlich folgenden Signalisierungskanäle wären dann aufeinanderfolgend Gruppen mit zunehmender oder abnehmender Sendeleistung zugeordnet. Dann kann das Teilnehmer-Endgerät zur Synchronisation auf einen anderen Signalisierungskanal denjenigen Signalisierungskanal auswerten, der von der Sende-/Empfangseinrichtung zeitlich unmittelbar benachbart zu demjenigen Signalisierungskanal ausgesendet wird, auf den das Teilnehmer-Endgerät aktuell synchronisiert ist. Speziell kann vorgesehen werden, dass sich die zu den Signalisierungskanälen zugehörigen Sendeleistungen um definierte Beträge unterscheiden und diese Beträge den Teilnehmer-Endgeräten - beispielsweise bereits durch entsprechende Vorprogrammierung der Endgeräte oder auch durch entsprechende Signalisierung seitens des Funk-Kommunikationssystems - mitgeteilt werden. Dann kann das Teilnehmer-Endgerät aus der aktuell gültigen Sendeleistung und und aus der eigentlich erforderlichen Sendeleistung auf einfache Weise ermitteln, an welcher Stelle innerhalb der zeitlichen Abfolge der Daten derjenige Signalisierungskanal gesendet wird, auf den sich das Teilnehmer-Endgerät synchronisieren muss.

Die vorliegende Erfindung umfasst außerdem eine Sende-/Empfangseinrichtung für ein Funk-Kommunikationssystem, bei dem zumindest während der Dauer einer Übertragungseinheit die Sendeleistung der Sende-/Empfangseinrichtung für Übertragungen an verschiedene Teilnehmer-Endgeräte einer definierte Gruppe von Teilnehmer-Endgeräten konstant gehalten wird bzw. werden muss, je nach den spezifischen Vorgaben und Anforderungen an das Funk-Kommunikationssystem. Diese erfindungsgemäße Sende-/Empfangseinrichtung ist charakterisiert durch eine Einrichtung zur Definition von mindestes zwei Gruppen von Teilnehmer-Endgeräten in Abhängigkeit mindestens einem Qualitätskriterium für die Datenübertragung von der Sende-/Empfangseinrichtung zu den Teilnehmer-Endgeräten. Weiterhin ist eine Einrichtung zur Steuerung der Sendeleistung pro Gruppe für Übertragungen an verschiedene Teilnehmer-Endgeräte jeder definierten Gruppe vorgesehen. Damit kann eine möglichst effektive Einstellung der Sendeleistung und damit möglichst geringe Störeinflüsse auf andere Kommunikationsverbindungen bei Beibehaltung einer konstanten Sendeleistung pro Gruppe von Teilnehmer-Endgeräten garantiert werden. Um außerdem Übertragungskapazitäten für eine möglichst große Zahl von Teilnehmer-Endgeräten bereitzustellen, können beispielsweise zusätzlich Einrichtungen vorgesehen werden, die eine Raummultiplex-Struktur erlauben. Insbesondere kann die Sende-/Empfangseinrichtung eine Einrichtung zur sektorisierten Datenübertragung von der Sende-/Empfangseinrichtung zu den Teilnehmer-Endgeräten aufweisen.

Spezielles Ausführungsbeispiele der vorliegenden Erfindung werden nachfolgend anhand der Figuren 1 bis 4 erläutert.

Es zeigen:
- FIG 1: Schematische Darstellung einer sektorisierten Funkzelle eines Funk-Kommunikationssystems mit zwei Gruppen von Teilnehmer-Endgeräten
- FIG 2: wie FIG 1, jedoch mit Gruppeneinteilung nach Abständen
- FIG 3: Schematische Darstellung der erfindungsgemäßen Komponenten einer Sende-/Empfangseinrichtung des Funk-Kommunikationssystems
- FIG 4: Darstellung eines MAC-Rahmens des Funk-Kommunikationssystems

Die hier dargestellten Ausführungsbeispiele beziehen sich auf eine Anwendung der vorliegenden Erfindung bei einem Funk-Kommunikationssystem nach dem Hiperlan/2-Standard (H2-Standard). Als Sende-/Empfangseinrichtungen des Funk-Kommunikationssystems sind dabei zentrale Stationen (Access Point Transceiver APT) vorgesehen, die mit schnurlosen Teilnehmer-Endgeräten (Wireless Terminal WT) kommunizieren. Wie bereits eingangs beschrieben, kann bei einem solchen H2-Funk-Kommunikationssystem die Sendeleistung des APT in der Abwärts-Übertragungsrichtung zu den WT hin (Downlink DL) nicht individuell für jedes WT bzw. für eine einzelne Kommunikationsverbindung eingestellt und gesteuert werden. Es muss vielmehr die Sendeleistung für eine gesamte Übertragungseinheit (Medium Access Control-Rahmen, MAC-Rahmen) für eine gesamte Gruppe von WTs konstant gehalten werden, wobei eine solche Gruppe bislang durch alle WTs der durch das APT definierten Funkzelle, bei der Verwendung sektorisierter Antennen durch alle WTs eines Sektors der Funkzelle gebildet wurde. Auch von einem ersten MAC-Rahmen zu einem nachfolgenden MAC-Rahmen darf sich die Sendeleistung des APT nur geringfügig ändern, speziell um maximal 3 dB pro MAC-Rahmen. Wie bereits beschrieben sind relativ hohe gegenseitige Störungen der Kommunikationsverbindungen die Folge. In der umgekehrten Übertragungsrichtung, also in Aufwärtsrichtung von den WTs zu dem APT (Uplink UL), kann dagegen eine individuelle Einstellung der Sendeleistung der einzelnen WTs erfolgen.

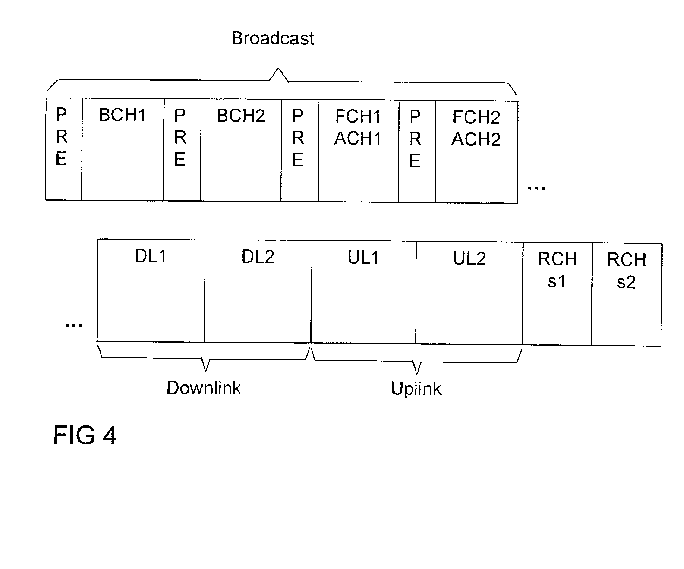

Bei dem H2-Standard handelt es sich um einen Standard für breitbandige Mobilfunksysteme, der zur Unterstützung unterschiedlicher Dienste mit unterschiedlichen Übertragungsanforderungen konzipiert wurde. Dabei weist die zentrale Station APT den Endgeräten WT Übertragungskapazitäten in Form von Kanälen zu. Zur Koordinierung des Kanalzugriffs, also des Zugriffs auf die Übertragungskapazitäten, werden MAC-Rahmen mit einer konstanten Länge von 2 ms verwendet. Am Anfang eines jeden MAC-Rahmens informiert die zentrale Station APT in einer Rundsendephase (Broadcast-Phase) die Endgeräte WT über die Kapazitätszuweisungen für jedes WT innerhalb der Downlink-Sendephase wie auch in der Uplink-Sendephase innerhalb des entsprechenden MAC-Rahmens. Hierzu wird auch auf die FIG 4 verwiesen. In dieser Broadcast-Phase werden Präambeln (PRE), Rundsende-Kanäle (Broadcast-Channel BCH1, BCH2) sowie Frame Channel (FCH1, FCH2) und Access Feedback Channel (ACH1, ACH2) gesendet. Am Ende jedes MAC-Rahmens sind noch Random Channel (RCHs1 RCHs2) vorgesehen. Die Länge der einzelnen Phasen innerhalb eines MAC-Rahmens ist variabel. Die Kapazitätszuweisung innerhalb eines MAC-Rahmens zu bestimmten WTs kann sich je nach dem aktuellen Bedarf an Übertragungskapazität für die entsprechenden WTs ändern. Da voraussichtlich eine stark unsymmetrische Datenübertragung mit einem hohen Datenverkehr in Downlink-Richtung immer bedeutsamer werden, gerade bei den zukünftig vorgesehenen Multimedia-Diensten. Somit ergibt sich eine immer größere Notwendigkeit, eine möglichst störungsfreie Datenübertragung in Downlink-Richtung zu gewährleisten.

Der H2-Standard erlaubt es, mehrere Gruppen von Endgeräten WT zu definieren, für die jeweils eine bestimmte Sendeleistung pro Gruppe eingestellt werden kann. Diese Definition von Gruppen ist bislang dafür vorgesehen, sektorisierte Antennen für die zentrale Station APT zu unterstützen und damit eine Unterteilung der entsprechenden Funkzelle in Sektoren zu ermöglichen. Es sind dabei bis zu acht Gruppen, also bislang bis zu acht Sektoren pro APT möglich. Dabei ist vorgesehen, dass die Daten für die verschiedenen Gruppen der verschiedenen Sektoren auf derselben Frequenz innerhalb eines MAC-Rahmens übertragen werden. Diese Möglichkeit ist in FIG 4 anhand eines einfachen Beispieles dargestellt durch zwei aufeinander folgende Datenbereiche DL1, DL2 in der Downlink-Phase des MAC-Rahmens für einen Fall mit zwei Gruppen, also zwei Sektoren. Entsprechend sind auch zwei aufeinander folgende Datenbereiche UL1, UL2 für die Uplink-Phase des MAC-Rahmens vorgesehen. Auch die Kanäle der Broadcast-Phase und die Random Channel sind entsprechend der Zahl der Gruppen, im Fall der FIG 4 zweifach, vorhanden. Es ist also eine gruppenspezifische, nach den bisherigen Verfahren speziell eine sektorspezifische, Unterteilung des MAC-Rahmens möglich. Jeder Gruppe ist eine eigene Broadcast-Phase BCH1, BCH2 zugeordnet, in der die Sendeleistung des APT für die jeweiligen Gruppen den WTs mitgeteilt wird.

Es wird nun vorgesehen, die Definition der Gruppen nicht über Sektoren der Funkzelle, sondern über mindestens ein Qualitätskriterium, speziell über das Signal zu Interferenz-Verhältnis (Carrier to Interference Ratio CIR) durchzuführen. Es kann aber auch die Signaldämpfung betrachtet werden, also die Abnahme der Signalintensität durch Hindernisse oder durch den Abstand zur zentralen Station APT. Es wird also die spezifische Auslegung des H2-Systems ausgenutzt, die eine Definition von Gruppen unterstützt (durch entsprechenden MAC-Rahmen-Aufbau, Signalisierungsabläufe etc.), was bislang zur Konfiguration von Sektoren eingesetzt wurde. Im Rahmen der vorliegenden Erfindung ist jedoch nicht zwingend die Konfiguration von Sektoren nötig, es kann vielmehr die zentrale Station APT mit einer omnidirektionalen Antenne betrieben werden. Alternativ können aber auch sektorisierte Antennen mit z.B. einer geringen Zahl von Sektoren vorgesehen werden, wobei dann eine Definition zusätzlicher Gruppen durch die zusätzliche Einteilung der Endgeräte nach Sektoren vorgesehen wird.

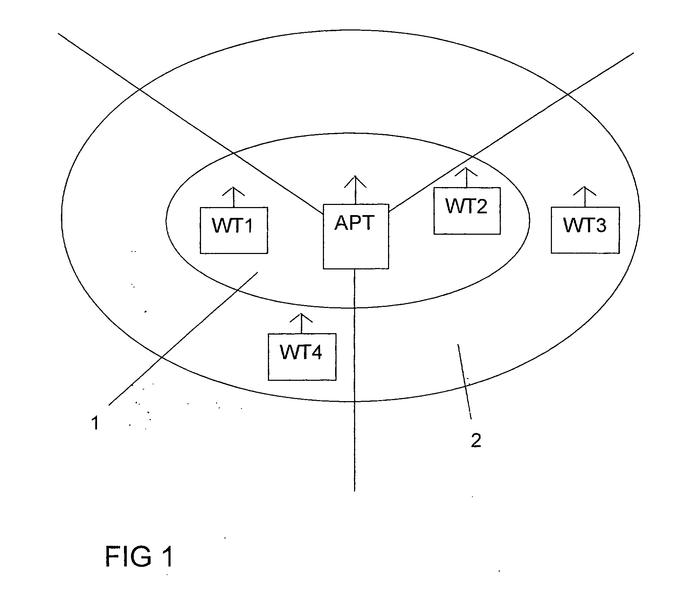

Ein Beispiel für eine Gruppendefinition über ein Qualitätskriterium, insbesondere das CIR, ist schematisch in FIG 1 dargestellt. FIG 1 stellt eine Funkzelle des H2-Systems mit einem APT dar. Weiterhin sind Endgeräte WT1 bis WT 4 dargestellt, die durch den APT versorgt werden, also zu dem APT eine Kommunikationsverbindung unterhalten. Es wird nun festgestellt, für welche der Endgeräte WT 1 bis WT 4 ein bestimmtes Maß für das CIR bei einer ersten, geringsten vorgesehenen Sendeleistung in Downlink-Richtung erfüllt ist, im Falle der FIG 1 sind dies die Endgeräte WT1 und WT2. Würde man diese Ermittlung für alle Positionen um den APT durchführen, so ergäbe sich beispielsweise ein erster, innerer Bereich 1 um den APT, innerhalb dessen das Qualitätskriterium bei der ersten, d.h. der geringsten vorgesehenen Sendeleistung erfüllt ist. Der innere Bereich 1 kann dabei je nach der Güte der Signalausbreitungswege in der Zelle eine beliebige Gestalt haben. Im Falle der FIG 1 wurde der Einfachheit halber angenommen, dass die Signalausbreitung in der horizontalen Richtung der FIG 1 ungestörter erfolgen kann als in der vertikalen Richtung. Der innere Bereich hat daher die Form einer Ellipse. Gebiete stärkerer Störungen bzw. Interferenzen führen zu Einbuchtungen des Bereiches. Die Form des ersten Bereiches 1 kann dynamisch variieren, wenn sich z.B. die Interferenzverhältnisse verbessern. Alle Endgeräte WT1, WT2, für die das Qualitätskriterium bei der ersten, der niedrigsten vorgesehenen Sendeleistung erfüllt ist, werden in einer ersten Gruppe zusammengefasst.

Außerhalb des ersten Bereiches 1 kann das Qualitätskriterium nicht mehr mit der niedrigsten vorgesehenen Sendeleistung erfüllt werden. Es wird daher eine zweite Gruppe von Endgeräten WT3, WT4 definiert, für die eine entsprechend höhere zweite Sendeleistung des APT festgelegt wird. Auch hier ergibt sich ein Bereich 2, innerhalb dessen sich alle Endgeräte WT3, WT4 befinden, die zu dieser Gruppe gehören, wobei auch hier die Struktur des Bereiches dynamisch variieren kann. In FIG 1 ist angenommen, dass für den zweiten Bereich 2 im wesentlichen dieselben Bedingungen für die Signalausbreitung gelten wie für den Bereich 1. Ein sich bewegendes Endgerät WT1, WT2 nimmt also sozusagen seinen jeweiligen Bereich 1, 2 so lange mit, bis das Qualitätskriterium nicht mehr erfüllt ist und ein Wechsel zu einer anderen Gruppe mit höherer zugehöriger Sendeleistung erforderlich ist. Es kann aber bei einer deutlichen Verbesserung des CIR auch ein Wechsel des Endgerätes WT zu einer Gruppe mit niedrigerer Sendeleistung erfolgen, um zu erreichen, dass für möglichst viele Endgeräte WT mit möglichst geringer Sendeleistung Daten in der Downlink-Richtung gesendet werden.

Es kann zusätzlich vorgesehen werden, dass die Funkzelle in einzelne Sektoren in Form von Raumwinkelbereichen unterteilt ist. In FIG 1 sind beispielhaft drei Sektoren von jeweils 120 ° dargestellt. Damit unterteilt sich jeder der Bereiche 1, 2 ebenfalls in drei Sektoren. Diese Maßnahmen trägt in bekannter Weise zur Erhöhung der Übertragungskapazität bei, die in der Funkzelle bereitgestellt werden kann.

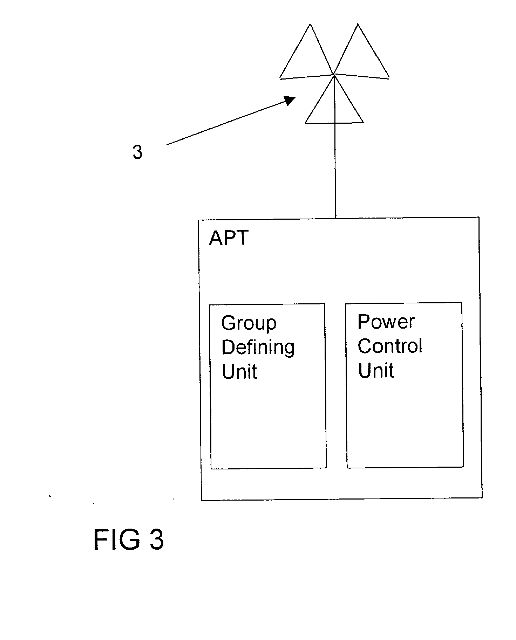

FIG 3 zeigt schematisch die wesentlichen Komponenten einer zentralen Station APT nach der vorliegenden Erfindung. Es wird eine erste Einrichtung vorgesehen, die dazu bestimmt ist, die Definition der Gruppen von Endgeräten durchzuführen. Diese Einrichtung ist in FIG 3 nach ihrer Funktion als Group Defining Unit bezeichnet. Sie kann durch eine separate Einrichtung, aber auch durch jede geeignete, bereits vorhandene Einrichtung des APT realisiert werden. Weiterhin ist eine zweite Einrichtung vorgesehen, die zur Steuerung der Sendeleistung pro Gruppe dient. Sie wurde daher in FIG 3 nach ihrer Funktion als Power Control Unit bezeichnet. Auch sie kann durch eine separate Einrichtung, aber auch durch jede geeignete, bereits vorhandene Einrichtung des APT realisiert werden. Optional kann der APT sektorisierte Antennen 3 aufweisen, wie ebenfalls in FIG 3 schematisch dargestellt.

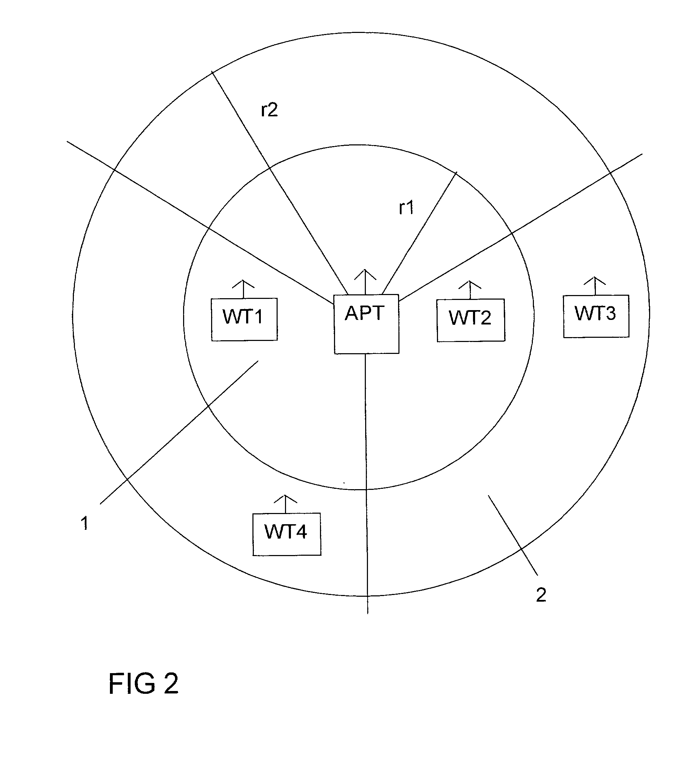

FIG 2 zeigt einen Spezialfall oder vereinfachten Fall der FIG 1, in dem eine gleichförmige Signalausbreitung in alle Richtungen vorliegt oder angenommen wird. Dann ergeben sich die Bereiche 1, 2 als Kreisringe mit Außenradien r1, r2 um die zentrale Station APT, d.h. die Gruppendefinition kann in einem solchen speziellen Fall auch über den Abstand des jeweiligen Endgerätes WT zur zentralen Station APT erfolgen. Auch in diesem Fall kann wiederum optional vorgesehen werden, dass eine Einteilung der Funkzelle in Sektoren entsprechend gewissen Raumwinkelbereichen erfolgt, wie auch FIG 2 zeigt.

Ein Wechsel eines Endgerätes WT zu einer anderen Gruppe kann aber auch dadurch bedingt sein, dass die in der aktuellen Gruppe des Endgerätes WT zur Verfügung stehende Übertragungskapazität nicht mehr den Bedarf decken kann, der für die anstehenden Datenübertragungen an das entsprechende Endgerät WT erforderlich ist. Hier kann gerade bei H2-Systemen der Umstand ausgenutzt werden, dass diese Systeme eine adaptive Modulation verwenden, d.h. die verfügbare Übertragungskapazität hängt ab von der Signalqualität, speziell vom CIR. Ein verbessertes CIR ermöglicht den Einsatz einer höherwertigeren Modulation bzw. einer geringeren Codierung im sogenannten PHY-Modus, wodurch die Datenrate, also die Übertragungskapazität erhöht wird. Da bei Verwendung einer höherwertigen Modulation zur Übertragung derselben Datenmenge weniger Zeit benötigt wird und bei Hiperlan/2 die Daten zu den einzelnen Gruppen im Zeitmultiplex übertragen werden,führt dies überdies zu einer Erhöhung der verfügbaren Übertragungskapazität (bzw. Übertragungszeit) für die übrigen Gruppen. Im vorliegenden Fall kann also ein Gruppenwechsel für ein Endgerät WT in eine neue Gruppe mit höherer zugehöriger Sendeleistung erfolgen, obwohl prinzipiell die Qualitätskriterien auch bei der niedrigeren Sendeleistung für die bisherige Gruppe erfüllt gewesen wären. Durch die nach dem Gruppenwechsel erhöhte Sendeleistung steigt jedoch das CIR, d.h. es kann dann mehr Übertragungskapazität für das Endgerät WT bereitgestellt werden.

Ein anderer Fall, in dem ein Gruppenwechsel aus Kapazitätsgründen nötig werden könnte, wäre, wenn einerseits zwar eine Sektorisierung der Funkzelle vorliegt, aber nicht für alle Sektoren der Zelle derselbe Funkkanal (Frequenz, TDMA-Zeitschlitz o.ä.) verwendet würde und andererseits zusätzlich die Übertragungskapazität in dem aktuellen Sektor nicht mehr für die anstehenden Datenübertragungen zu einem bestimmten Endgerät ausreichen würde. Dann wäre auch kein dynamischer Ausgleich der Übertragungskapazitäten zwischen den einzelnen Sektoren mehr möglich, wie vorstehend am Beispiel der FIG 4 beschrieben, es müsste also in diesem Fall direkt ein Gruppenwechsel des Endgerätes WT erfolgen, um die erforderliche Übertragungskapazität zu gewährleisten. Im H2-Standard ist zwar derzeit eine solche Verwendung unterschiedlicher Funkkanäle in den unterschiedlichen Zellen nicht vorgesehen, aber dies wäre bei H2-Systemen prinzipiell durchaus denkbar, gerade z.B. durch eine Unterteilung im Zeitbereich, siehe hierzu beispielsweise DE 198 24 961.

Der Gruppenwechsel eines Endgerätes WT kann dadurch vereinfacht werden, dass die MAC-Rahmenstruktur in der Broadcast-Phase sehr genau definiert ist und auch die Länge des MAC-Rahmens mit 2 ms genau festliegt. Werden die ausgesendeten BCH-Kanäle geeignet entsprechend der Definition der Gruppen in der gleichen Abfolge festgelegt, dann kann ein Gruppenwechsel eines Endgerätes zu einer angrenzenden Gruppe einfach dadurch erfolgen, dass es sich auf den entsprechenden zeitlich benachbarten BCH-Kanal synchronisiert und ggf. die weiteren Prozeduren zum Gruppenwechsel durchführt. Im Fall der FIG 1 und 4 würde dies bedeuten, dass der BCH1 der Gruppe 1 im Bereich 1 und der BCH2 der Gruppe 2 im Bereich 2 zugeordnet werden könnte. Ein Wechsel beispielsweise des Endgerätes WT1 von der Gruppe 1 zur Gruppe 2 würde dann mit einer Synchronisation des Endgerätes WT1 vom Kanal BCH1 auf den zeitlich unmittelbar folgenden Kanal BCH2 einhergehen. Dies würde das Verfahren des Gruppenwechsels wesentlich vereinfachen und beschleunigen. Ein Vorteil ergibt sich insbesondere dann, wenn aufgrund den momentanen Übertragungsverhältnissen für die aktuelle Gruppe eines Endgerätes WT und bei ber zugehörigen Sendeleistung kein Datenaustausch zwischen dem APT und dem Endgerät WT möglich ist. Da das Endgerät aufgrund der definierten Struktur des MAC-Rahmens zumindest implizit Kenntnis über die zeitliche Länge des BCH einer Gruppe mit höherer Sendeleistung besitzt, kann ein Wechsel sehr zügig erfolgen und so schneller der Datenaustausch zwischen APT und Endgerät WT wieder aufgenommen werden.

## Patentansprüche

1. Verfahren zur Übertragung von Daten von einer Sende-/Empfangseinrichtung (APT) eines Funk-Kommunikationssystems zu Teilnehmer-Endgeräten (WT1, WT2, WT3, WT4) des Funk-Kommunikationssystems, wobei jeweils zumindest während der Dauer einer Übertragungseinheit die Sendeleistung der Sende-/Empfangseinrichtung (APT) für Übertragungen zu Teilnehmer-Endgeräten (WT1, WT2, WT3, WT4) einer definierte Gruppe von Teilnehmer-Endgeräten (WT1, WT2, WT3, WT4) konstant gehalten wird,
**dadurch gekennzeichnet,**
**dass** zumindest für die Dauer einer Übertragungseinheit mindestens zwei Gruppen von Teilnehmer-Endgeräten (WT1, WT2, WT3, WT4) in Abhängigkeit von mindestens einem Kriterium für die Datenübertragung von der Sende-/Empfangseinrichtung (APT) zu den Teilnehmer-Endgeräten (WT1, WT2, WT3, WT4) definiert werden, und die Sendeleistung der Sende-/Empfangseinrichtung (APT) gruppenindividuell gesteuert wird.

2. Verfahren nach Anspruch 1,
**dadurch gekennzeichnet,**
**dass** als ein Kriterium ein Verhältnis aus dem von der Sende-/Empfangseinrichtung (APT) zu den Teilnehmer-Endgeräten (WT1, WT2, WT3, WT4) übertragenen Signal zu Störsignalen verwendet wird.

3. Verfahren nach Anspruch 1 oder 2,
**dadurch gekennzeichnet,**
**dass** als ein Kriterium eine Signaldämpfung der von der Sende-/Empfangseinrichtung (APT) zu den Teilnehmer-Endgeräten (WT1, WT2, WT3, WT4) übertragenen Signale verwendet wird.

4. Verfahren nach einem der Ansprüche 1 bis 3,
**dadurch gekennzeichnet,**
**dass** als ein Kriterium Abstände zu der Sende-/Empfangseinrichtung (APT) berücksichtigt werden.

5. Verfahren nach einem der Ansprüche 1 bis 4,
**dadurch gekennzeichnet,**
**dass** die Definition der Gruppen über den aktuellen Aufenthaltsort der Teilnehmer-Endgeräte (WT1, WT2, WT3, WT4) innerhalb eines definierten Radius um die Sende-/Empfangseinrichtung (APT) erfolgt.

6. Verfahren nach einem der Ansprüche 1 bis 5,
**dadurch gekennzeichnet,**
**dass** die Definition der Gruppen zusätzlich über den aktuellen Aufenthaltsort der Teilnehmer-Endgeräte (WT1, WT2, WT3, WT4) innerhalb von definierten Raumwinkelbereichen um die Sende-/Empfangseinrichtung (APT) erfolgt.

7. Verfahren nach einem der Ansprüche 1 bis 6,
**dadurch gekennzeichnet,**
**dass** ein Teilnehmer-Endgerät (WT1, WT2, WT3, WT4) bei einem ersten Zugriff auf das Funk-Kommunikationssystem entsprechend der definierten Gruppenzugehörigkeit auf einen bestimmten Signalisierungskanal (BCH1, BCH2) synchronisiert und die Datenübertragung zu diesem Teilnehmer-Endgerät (WT1, WT2, WT3, WT4) so lange über diesen bestimmten Signalisierungskanal (BCH1, BCH2) gesteuert wird, bis mindestens ein Kriterium einen definierten ersten Schwellwert überschreitet oder einen definierten zweiten Schwellwert unterschreitet.

8. Verfahren nach einem der Ansprüche 1 bis 7,
**dadurch gekennzeichnet,**
**dass** ein Teilnehmer-Endgerät (WT1, WT2, WT3, WT4) bei einem ersten Zugriff auf das Funk-Kommunikationssystem entsprechend der definierten Gruppenzugehörigkeit auf einen bestimmten Signalisierungskanal (BCH1, BCH2) synchronisiert, und die Datenübertragung zu diesem Teilnehmer-Endgerät (WT1, WT2, WT3, WT4) so lange über diesen bestimmten Signalisierungskanal (BCH1, BCH2) gesteuert wird, bis die für eine Datenübertragung von der Sende-/Empfangseinrichtung (APT) zu dem Teilnehmer-Endgerät (WT1, WT2, WT3, WT4) benötigte Übertragungskapazität die für die Gruppe, der das Teilnehmer-Endgerät angehört, verfügbare Übertragungskapazität überschreitet.

9. Verfahren nach Anspruch 7,
**dadurch gekennzeichnet,**
**dass** bei einem Unterschreiten des ersten Schwellwertes ein Gruppenwechsel des Teilnehmer-Endgerätes (WT1, WT2, WT3, WT4) zu einer anderen Gruppe mit einer höheren Sendeleistung der Sende-/Empfangseinrichtung (APT) und einem anderen Signalisierungskanal (BCH1, BCH2) erfolgt, und dass bei einem Überschreiten des zweiten Schwellwertes ein Gruppenwechsel des Teilnehmer-Endgerätes (WT1, WT2, WT3, WT4) zu einer anderen Gruppe mit einer niedrigeren Sendeleistung der Sende-/Empfangseinrichtung (APT) und einem anderen Signalisierungskanal (BCH1, BCH2) erfolgt.

10. Verfahren nach Anspruch 8,
**dadurch gekennzeichnet,**
**dass** bei Überschreiten der Übertragungskapazität ein Gruppenwechsel des Teilnehmer-Endgerätes (WT1, WT2, WT3, WT4) unter Synchronisation des Teilnehmer-Endgerätes (WT1, WT2, WT3, WT4) auf einen anderen Signalisierungskanal (BCH1, BCH2) einer anderen Gruppe mit einer höheren Sendeleistung der Sende-/Empfangseinrichtung (APT) erfolgt.

11. Verfahren nach Anspruch 9 oder 10,
**dadurch gekennzeichnet,**
**dass** das Teilnehmer-Endgerät (WT1, WT2, WT3, WT4) zur Synchronisation auf einen anderen Signalisierungskanal (BCH1, BCH2) denjenigen Signalisierungskanal (BCH1, BCH2) auswertet, der von der Sende-/Empfangseinrichtung (APT) zeitlich unmittelbar benachbart zu demjenigen Signalisierungskanal (BCH1, BCH2) ausgesendet wird, auf den das Teilnehmer-Endgerät (WT1, WT2, WT3, WT4) aktuell synchronisiert ist.

12. Verfahren nach Anspruch 11,
**dadurch gekennzeichnet,**
**dass** die Reihenfolge der Signalisierungskanäle (BCH1, BCH2) durch die aufsteigende oder absteigende Reihenfolge der Höhen der zugehörigen Sendeleistungen definiert wird.

13. Verfahren nach einem der Ansprüche 10 bis 12,
**dadurch gekennzeichnet,**
**dass** sich die zu den Signalisierungskanälen (BCH1, BCH2) zugehörigen Sendeleistungen um definierte Beträge unterscheiden und diese Beträge den Teilnehmer-Endgeräten (WT1, WT2, WT3, WT4) mitgeteilt werden.

14. Sende-/Empfangseinrichtung für ein Funk-Kommunikationssystem, bei dem zumindest während der Dauer einer Übertragungseinheit die Sendeleistung der Sende-/Empfangseinrichtung (APT) für Übertragungen an verschiedene Teilnehmer-Endgeräte (WT1, WT2, WT3, WT4) einer definierte Gruppe von Teilnehmer-Endgeräten (WT1, WT2, WT3, WT4) konstant gehalten wird, **gekennzeichnet durch**
eine Einrichtung (Group Defining Unit) zur Definition von mindestes zwei Gruppen von Teilnehmer-Endgeräten (WT1, WT2, WT3, WT4) in Abhängigkeit von mindestens einem Kriterium für die Datenübertragung von der Sende-/Empfangseinrichtung (APT) zu den Teilnehmer-Endgeräten (WT1, WT2, WT3, WT4), und eine Einrichtung (Power Control Unit) zur Steuerung einer Sendeleistung pro Gruppe für Übertragungen zu Teilnehmer-Endgeräten (WT1, WT2, WT3, WT4) einer jeweiligen Gruppe.

15. Sende-/Empfangseinrichtung nach Anspruch 14,
**gekennzeichnet durch**,
eine Einrichtung (3) zur sektorisierten Datenübertragung von der Sende-/Empfangseinrichtung (APT) zu den Teilnehmer-Endgeräten (WT1, WT2, WT3, WT4).
